# EUROPEAN PATENT SPECIFICATION

(11) **EP 4 497 844 B1**
(45) Date of publication and mention of the grant of the patent: **15.04.2026**
(21) Application number: 23315292.5
(22) Date of filing: 24.07.2023
(51) Int. Cl.: C25B 1/04, C25B 9/015, C25B 9/19, C25B 9/63, C25B 9/75, C25B 9/77

(54) **MULTI-ELECTRODE PACKAGE-CELL FRAME FOR A HYDROGEN ELECTROLYZER, ELECTROLYZER COMPRISING THE SAME, AND FABRICATION METHOD**
MEHRELEKTRODEN-VERKAPSELUNGSZELLENRAHMEN FÜR EINEN WASSERSTOFFELEKTROLYSEUR, ELEKTROLYSEUR DAMIT UND HERSTELLUNGSVERFAHREN
CADRE MULTI-ÉLECTRODE DE BOÎTIER-CELLULE POUR ÉLECTROLYSEUR D'HYDROGÈNE, ÉLECTROLYSEUR LE COMPRENANT ET PROCÉDÉ DE FABRICATION

(43) Date of publication of application: 29.01.2025
(73) Proprietor: John Cockerill Hydrogen France, 68700 Aspach-Michelbach (FR)
(72) Inventor: WALTER, Tobias, 38100 GRENOBLE (FR)
(74) Representative: IP Trust

(56) References cited:
- EP-A1- 3 016 182
- US-A1- 2010 187 102
- US-A1- 2014 305 794

## Description

### FIELD OF THE INVENTION

The technical domain of the invention is that of an apparatus designed to perform alkaline water electrolysis for the production of hydrogen, and more specifically on a frame designed to hold electrodes in an electrolyzer.

### BACKGROUND OF THE INVENTION

Hydrogen (H₂) is an energy vector that is gathering a lot of attention due to its potential to be produced in an environment-friendly manner and to support the emergence of low-carbon emission industrial processes and transportation means.

As for hydrogen production, electrochemical water splitting is a well-known approach that is sustainable and pollution-free.

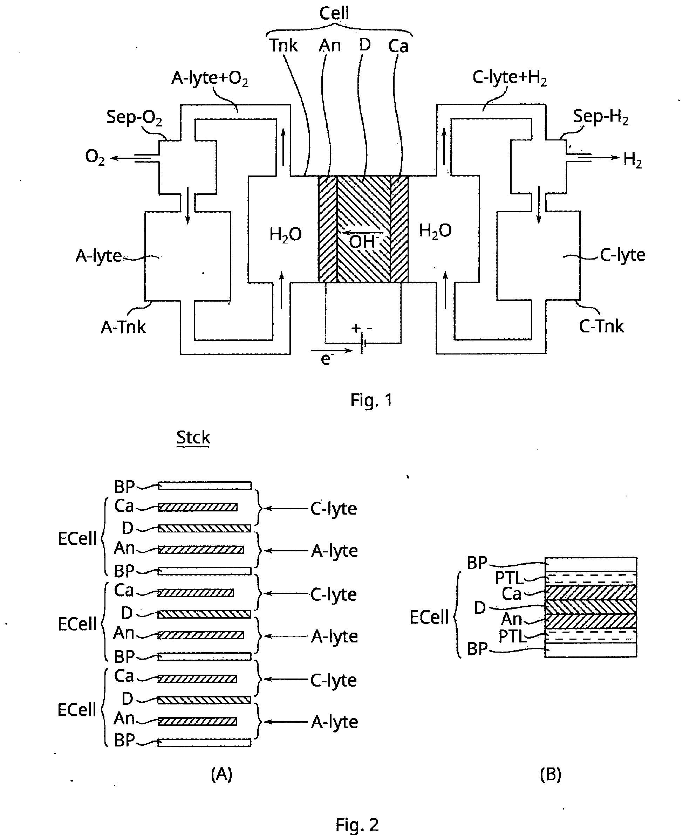

This approach can be implemented by alkaline water electrolysis, in which electrolysis of water H₂O is performed by flowing a direct current of electrons e⁻ between an anode An and a cathode Ca immersed in an aqueous alkaline electrolyte, as illustrated in Figure 1, that shows the principle of use of a conventional electrolytic cell Cell containing these elements in a tank Tnk.

At the cathode, electrons provided by the direct current react with water to produce hydrogen gas and hydroxide ions according to the reaction:

*2H₂O + 2e⁻* → 2*H*₂ + 2*OH⁻*

At the anode, the hydroxide ions release their electrons in excess to produce water and oxygen gas according to the reaction:

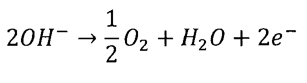

These electrodes are separated by a thin porous foil commonly referred to as diaphragm D, that is a separator nonconductive to electrons, separating the product gases and letting hydroxide ions (OH⁻) pass from the cathode side to the anode side.

Ionic conductivity is supplied by the aqueous alkaline electrolyte, usually an aqueous solution of potassium hydroxide (KOH) or sodium hydroxide (NaOH). As illustrated in Figure 1, in a conventional implementation of alkaline hydrolysis, two fluidic circuits separated by the diaphragm D are employed, one comprising the anode An and the other one comprising the cathode Ca. The electrolyte bathing the anode is designated as "anolyte" (A-lyte in the figure), and the electrolyte bathing the cathode is designated as "catholyte" (C-lyte in the figure). It is preferable to prevent mixing between the anolyte and the catholyte to keep the product gases O₂ and H₂ as pure as possible.

The mix comprising the anolyte A-lyte and produced oxygen gas O₂ is pumped out of the cell and goes through a first gas-liquid separator Sep-O₂ where the oxygen gas O₂ is separated from the anolyte A-lyte. The oxygen gas is then retrieved separately and the anolyte sent into an anolyte tank A-Tnk before being circulated again through the tank Tnk of the cell Cell.

Symmetrically, the mix comprising the catholyte C-lyte and produced hydrogen gas H₂ is pumped out of the cell and goes through a second gas-liquid separator Sep-H₂ where the hydrogen gas H₂ is separated from the catholyte C-lyte. The hydrogen gas is then retrieved separately and the catholyte sent into a catholyte tank C-Tnk before being circulated again through the tank Tnk of the cell Cell.

For a production of hydrogen at an industrial scale, stacks Stck that can be made of several hundreds of electrolytic cells, similar in their working principle to that of Figure 1, are employed. Figure 2 illustrates such a stack at (A), made of stacked electrolytic cells ECell comprising each a bipolar plate BP in addition to an anode An, a cathode Ca and a diaphragm D. The anode and the cathode can be formed from catalyst layers in direct contact with the diaphragm. The bipolar plates are electrically conductive and separate physically two adjacent cells while providing electrical continuity between them by transporting electrons from one cell to the next one.

Figure 2 illustrates at (B) a known electrolytic cell ECell, comprising porous transport layers PTL to be interposed between the bipolar plates and the next ones of the anodes and the cathodes of a stack Stck. Such porous transport layers have for functions to enhance (1) utilization of the catalyst layers, (2) transportation of the reactant water to the anode and cathode, (3) removing produced oxygen gas and hydrogen gas, and (4) electron conduction. Still, such porous layers are only optional, and may be present on only one of the cathode and the anode. For example, a porous transport layer may be present on the cathode but not on the anode.

Patent document WO 2006/112919 A2 describes an electrode assembly and emphasizes the necessity to simplify the mounting of such electrode assemblies, which involves numerous individual components such as bolts or other fasteners, gaskets, electrodes, diaphragms. The patent document WO 21006/112919 A2 suggests a technical solution involving a frame and a pair of supports maintaining an anode, a bipolar plate and a cathode stacked in this order and joined together.

However, to further lower the cost and the dimensions of a stack, more complete technical solutions are still needed. EP3016182 and US2014305794 disclose frames, EP3016182 discloses battery frames with bipolar plates and US2014305794 discloses a monobloc cell frame for a single bipolar plate.

### OBJECT OF THE INVENTION

In view of the issues above, the applicant considered optimizing the assembly of the components forming a stack so as to facilitate an assembly of this stack, reducing its dimensions and the amount of materials involved in its fabrication, while preserving or even improving reliability of its overall hydrogen production.

To this effect, the applicant proposes a single cell frame configured to hold elements forming a plurality of electrolytic cells, called a multi-electrode package-cell frame in the present document. Each electrolytic cell comprises elements necessary for water splitting and hydrogen production when repeated in a stack : at least a diaphragm, an anode, a cathode and a bipolar plate. Other well-known components necessary to enhance the efficiency of the hydrolysis may be included as well, such as catalyst layers for the anode and the cathode and porous transportation layers.

The illustration of a stack Stck of electrolytic cells ECell at (A) of Figure 2 outlines the requirements for a frame holding this stack : electrolytic cells ECells comprising each a bipolar plate BP, an anode An, a diaphragm D and a cathode Ca have to be held in their respective positions, while allowing for the anolyte A-lyte and the catholyte C-lyte to bathe the anode and the cathode, respectively. Mixing of the anolyte and the catholyte has to be prevented, as well as the mixing of produced hydrogen and oxygengases.

### SUMMARY OF THE INVENTION

The invention is defined by the independent claims 1, 12-14.

A first aspect of the invention relates to a cell frame configured to be integrated in an electrolyzer, the frame forming a closed shape having an inner contour that defines an opening extending in an extension plane, the inner contour presenting at least two steps each comprising a first surface perpendicular to the extension plane and a second surface parallel to the extension plane, the respective second surfaces of two of the steps being configured to support two respective bipolar plates.

A primary advantage of this device is to minimize the number of fixation accessories necessary to hold the elements ensuring the electrochemical functions of the electrolytic cells.

Another advantage is that the mounting of a whole stack of electrolytic cells is much easier when sets of a plurality of electrolytic cells are already integrated as a package P, or set, of electrolytic cells packaged in a multi-electrode package cell-frame.

Further, mounting a plurality of electrolytic cells in a single frame allows for an easier fine-tuning of the overall structure and for an reduction in the quantity of the materials used to form the frame itself, which lower the cost of the system.

According to further non-imitative features of the first aspect of the invention, either taken alone or in any technically feasible combination:
- the second surface of a third one of the at least two steps is configured to support a diaphragm interposed between the two respective bipolar plates;
- the second surfaces of the at least two steps each have a groove for a sealant member;
- the cell frame is formed from an electrically insulating material;
- the cell frame is a monobloc cell frame.
- the cell frame further comprises :
   ∘ a plurality of main extending through an entire thickness of the cell frame in a direction perpendicular to the extension plane, and
   ∘ distribution channels extending substantially in parallel to the extension plane from a respective one of the main channels to a respective one of the first surfaces so as to fluidically connect the main channels to the inner contour;
- first ones of the distribution channels are formed at respective first depths along a thickness of the cell frame, second ones of the distribution channels are formed at respective second depths along the thickness of the cell frame, the first channels alternating in depth with the second channels;
- the distribution channels do not overlap one another when seen in a direction perpendicular to the extension plane;
- the closed shape is circular, the first surfaces defining respective internal radiuses of the inner contour;
- the at least two steps comprise two steps having respective second surfaces oriented toward a same direction, and a first internal width defined by the first surface of one of the steps is wider than a second internal width defined by the first surface of the other of the steps;
- the at least two steps comprise two steps having second surfaces that are respectively oriented toward two opposite directions and first surfaces defining a same internal width.

A second aspect of the invention relates to a package comprising the cell frame as define above and comprising further at least two bipolar plates and two diaphragms mounted on the cell frame.

According to a third aspect, the invention relates to an electrolyzer comprising a stack of a plurality of the packages.

Finally, and according to a fourth aspect, the invention relates to a process of fabrication of the electrolyzer according to the third aspect, the process comprising the steps of:
- assembling a plurality of the packages according to the second aspect of the invention; and
- stacking the plurality of assembled packages so as to form the stack.

### FIGURES

Many other features and advantages of the present invention will become apparent from reading the following detailed description, when considered in conjunction with the accompanying drawings, in which:
- Figure 1 illustrates a conventional water splitting electrolytic cell equipped with electrolyte recirculation ;
- Figure 2 illustrates the principle of stacks of electrolytic cells ;
- Figure 3 illustrates the cell frame according to the invention, in a plane view ;
- Figure 4 illustrates a part of a package of electrolytic cells based on the cell frame of figure 3, equipped with elements forming a plurality of electrolytic cells, as seen in cross-section ;
- Figure 5 is a detailed perspective view of a region of the cell frame of figure 3;
- Figure 6 shows cross-section views of anolyte and catholyte circulation channels in regions of the cell frame of Figure 5;
- Figure 7 is an exploded view of the cell frame of Figure 4;
- Figure 8 illustrates an electrolyzer incorporating the package of Figure 4; and
- Figure 9 illustrates a process of fabrication of the electrolyzer of Figure 8.

### DETAILED DESCRIPTION OF A SPECIFIC EMBODIMENT OF THE INVENTION

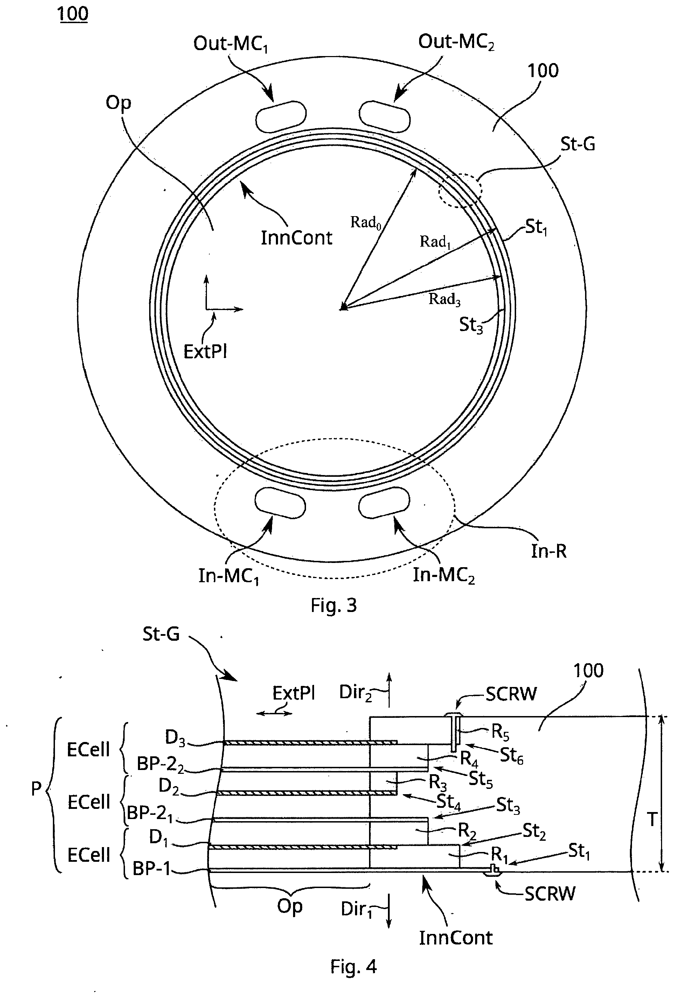

The present invention is described hereunder with the help of figures 3 to 8. For the sake of readability of the figures, some elements are represented on some of the figures only.

Figure 3 illustrates the general structure of a multi-electrode package-cell frame 100 according to the invention. The frame 100 forms a circular closed shape having an inner contour InnCont that defines a circular opening Op extending in an extension plane ExtPl. The frame 100 is preferably a monobloc frame, i.e. formed as a single piece of material, and preferably formed from a single piece of an electrically insulating material. In some embodiments, the frame may be made of a conductive material, electrically isolated from other frames of a stack.

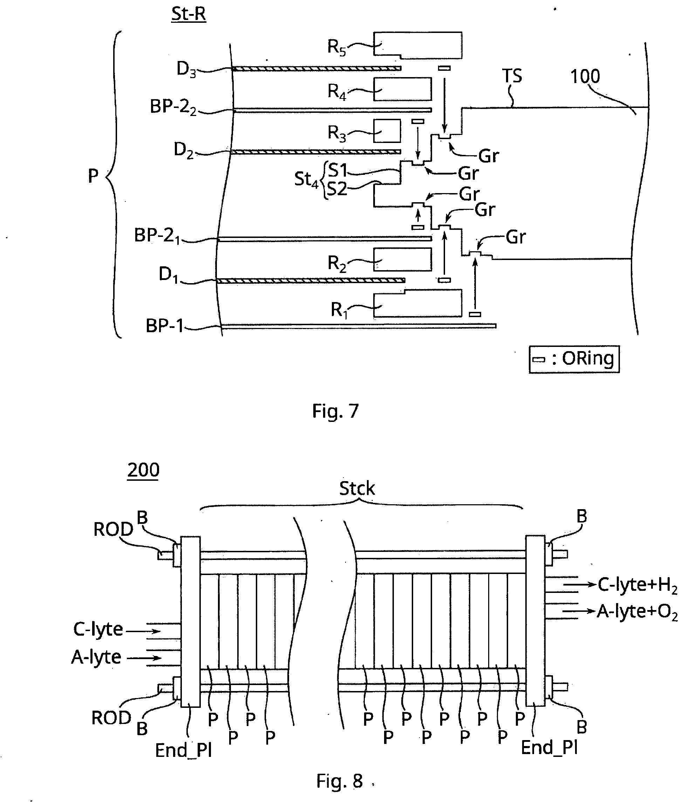

The inner contour presents a staggered geometry St-G comprising a plurality of steps, six steps identified St₁ to St₆ in the example illustrated by Figure 4, each comprising a first surface S1 perpendicular to the extension plane and a second surface S2 parallel to the extension plane. Figure 7 illustrates this geometry for the step St₄. The staggered geometry extends continuously so as totally surround the opening.

The first surfaces S1 define respective internal widths of the inner contour of the closed shape, the internal widths being internal radiuses of the inner contour when the closed shape is circular, as illustrated in the present document.

The function of the second surfaces S2 is to receive either a bipolar plate BP or a diaphragm D, that are to occupy the opening Op within the frame 100. In the example of Figure 4, the second surfaces of steps St₁ to St₆ receive respectively a bipolar plate BP-1, a diaphragm D₁, a bipolar plate BP-2₁, a diaphragm D₂, a bipolar plate BP-2₂ and a diaphragm D₃. Bipolar plates and diaphragms are in alternance to form electrolytic cells each indicated by ECell and made of one of the bipolar plates and an adjacent one of the diaphragms.

Although anodes and cathodes (or catalysts thereof) are not shown in this figure for the sake of clarity, it should be understood that each of the bipolar plates associated to an anode and a cathode and interposed therebetween, as conventionally known. The bipolar plates are made of an electrically conductive material, usually a metal such as stainless steel, to transfer electrons between the anode and the cathode. Porous transport layers may be added between adjacent to the electrodes, as conventionally known and illustrated at (B) of Figure 2.

Thus, pairs comprising a bipolar plate and a diaphragm in Figure 4 should be understood as forming electrolytic cells ECell including each a diaphragm and an anode and a cathode associated to a bipolar plate: bipolar plate BP-1 and diaphragm D₁ form a first electrolytic cell ECell, bipolar plate BP-2₁ and diaphragm D₂ form a second electrolytic cell ECell, and bipolar plate BP-2₂ and diaphragm D₃ form a third electrolytic cell ECell. The example of Figure 4 comprises three electrolytic cells ECell, but the cell frame 100 could be designed to hold any number of electrolytic cells, preferably two or more and five or less.

The staggered geometry allows the successive positioning of the elements - bipolar plates and diaphragms - when mounting an actual device, while ensuring a proper mechanical support of these elements.

The second surfaces may be oriented toward either one of two opposite directions Dir₁ and Dir₂ perpendicular to the extension plane ExtPl. In figure 4, the surfaces S2 of the steps St₁, St₂ and St₃ are oriented toward direction Dir₁ while the surfaces S2 of the steps St₄, St₅ and St₆ are oriented toward direction Dir₂.

Such a use of opposite staggering direction allows using two elements - bipolar plates or diaphragms - of a same dimension directly onto the frame 100, such as the bipolar plates BP-2₁ and BP-2₂ which have a same radius Rad₃, corresponding to the inner radius defined by surfaces S1 of steps St₃ and St₅, facilitating the overall fabrication and maintenance processes by reducing the number of elements having different characteristics.

In contrast, the bipolar plate BP-1, which is to be supported by a surface S2 oriented toward the same direction Dir1 as the surface S2 supporting the bipolar plate BP-2₁, has a wider radius Rad₁ defined by the first surface S1 of the step St1 that the bipolar plate BP-2₁.

In some embodiment, it may be preferable to orient all the surfaces S2 of the steps toward a single direction, for instance to ease the assembly of bipolar plates and diaphragms on the frame in an industrial context.

Rings R₁ to R₆, having shapes complementary to those of the frame 100, are pressed against the bipolar plates and the diaphragms when they are positioned within the frame and are used to complete the assembly and hold in place the bipolar plates and the diaphragms. The rings have an inner radius equal to that of the smallest inner radius Rad₀ of the frame 100. Outer radiuses of the rings vary, each ring having an outer radius corresponding to the inner radius corresponding to the step where it is to be positioned. For example, the ring R₃ as an outer radius equal to the radius defined by the surface S1 of the step St₄ on which it is to be positioned, as illustrated by Figure 7, optionally keeping some dimensional margin for mounting onto the frame 100.

The rings can be considered as fixation elements and spacer elements maintaining a space between the diaphragms and the bipolar plates. Screws SCRW, fixing the most exterior elements of the packaged cells -bipolar plate, diaphragm or ring - onto the frame, ensure a tight contact between adjacent elements. In the example frame illustrated by Figure 3, the uppermost ring, the ring R5, and the lower most bipolar plate, the bipolar plate BP-1, are held by screws SCRW screwed into the frame 100.

The electrodes and the porous transportation layers are circular-shaped and have a radius substantially equal do the minimum inner radius Rad₀ of the frame 100, so as to be pushed by force in the opening Op and held in place by the inner contour InnCont. Their mounting is completed once the screws SCRW are in place. Still, they could also be fixed by means of additional screws, clamps, or other fixation means.

Figure 7 shows, in an exploded view, O-rings ORING to be placed into grooves Gr formed into the frame 100 and so as to ensure sealing between adjacent fluidic circuits in which the anolyte A-lyte and the catholyte C-lyte circulate. More specifically, grooves Gr are formed on the surfaces S2 of each of the steps St₁, St₂, St₃, St₅ and St₆ and on a top surface TS of the frame 100. The last one is to ensure sealing at the junction between two frames 100 in a stack. These O-rings each enclose the opening Op.

Figure 3, Figure 5 and Figure 6 illustrate the design of the circulation channels in which the anolyte and the catholyte circulate.

Figure 3 illustrates four openings crossing through the thickness T of the frame 100, that form main channels extending in a direction perpendicular to the extension plane ExtPl - that is a stacking direction when a plurality of frames 100 are stacked. The frames are intended to be stacked so that corresponding through openings face one another. The openings comprise two main channel inlets In-MC₁ and In-MC₂, respectively dedicated to the anolyte and to the catholyte. Similarly, the openings comprise two main channel outlets Out-MC₁ and Out-MC₂, respectively dedicated to the anolyte and to the catholyte.

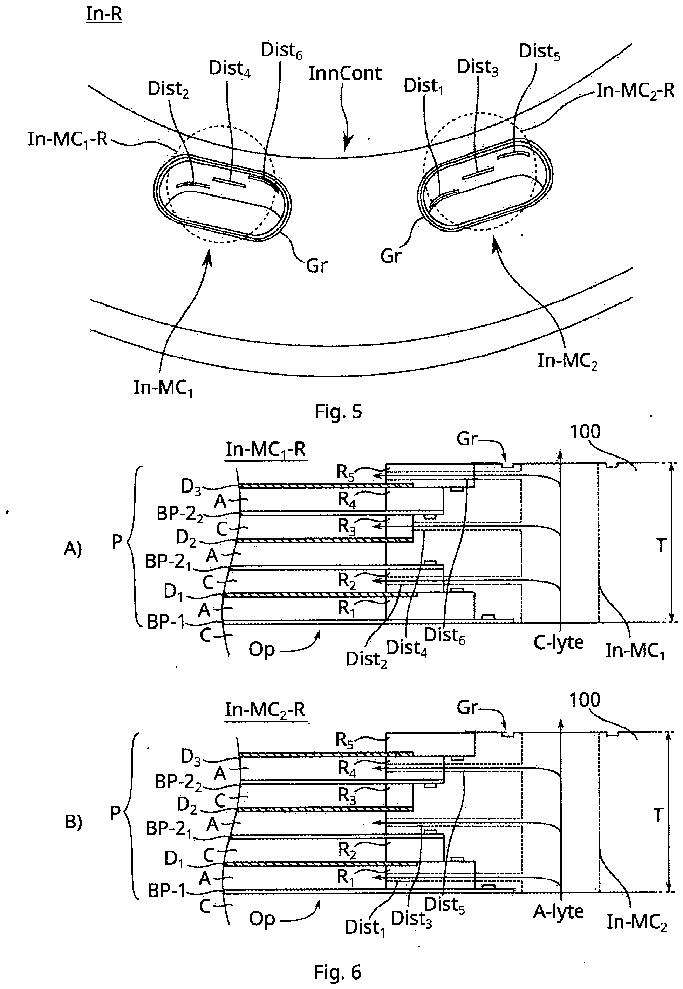

Figure 5 illustrates the inlet region In-R in a perspective view so that the entrances of distribution channels Dist₁, Dist₃ and Dist₅ are visible in the inlet main channel In-MC₁, and the entrances of distribution channels Dist₂, Dist₄ and Dist₆ are visible in the inlet main channel In-MC₂. The distribution channels do not overlap one another when seen in a direction perpendicular to the extension plane ExtPl, which has the advantage of preventing the concentration of mechanical weaknesses within the structure of the frame 100.

Figure 6 illustrates regions In-MC₁-R and In-MC₂-R comprising respectively the main channels In-MC₁ and In-MC₂, in cross-section views extending to the opening Op.

Figure 6 illustrates at B) that the distribution channels Dist₁ and Dist₅ extend within rings R₁ and R₄, respectively, the distribution channels Dist₁, Dist₃ and Dist₅ opening into the opening Op through the inner contour of the frame 100, and more specifically into the anode sides A of the diaphragms D₁ to D₃ - although the anodes are not represented, it is understood that they are located on the sides indicated by "A" of the bipolar plates.

Conversely, Figure 6 illustrates at A) that the distribution channels Dist₂, Dist₄ and Dist₆ extend within rings R₂, R₃ and R₅, respectively, the distribution channels Dist₂, Dist₄ and Dist₆ opening into the opening Op through the inner contour of the frame 100, and more specifically into the cathode sides C of the diaphragms D₁ to D₃ - although the anodes are not represented, it is understood that they are located on the sides indicated by "C" of the bipolar plates.

Distribution channels communicating to the two main channel outlets Out-MC₁ and Out-MC₂ present characteristics symmetric to the distribution channels Dist₁ to Dist₆ detailed above.

From the preceding paragraphs, it is apparent that the inlet main channel In-MC₁ and the inlet main channel In-MC₂ are dedicated to the anolyte A-lyte and to the catholyte C-lyte, respectively. Similarly, the outlet main channel Out-MC₁ and the outlet main channel Out-MC₂ are dedicated to the anolyte A-lyte and to the catholyte C-lyte, respectively. Also, the rings have to be designed so as to include through openings configured to prolong the distribution channels.

Openings of the main channels In-MC₁, In-MC₂, Out-MC₁ and Out-MC₂ are surrounded by respective grooves Gr configured to receive O-rings insuring sealing of the main channels at the junctions between two consecutive frames 100 in a stack of such frames. These O-ring enclose respectively openings of the main channels.

The frame 100 and each of the rings R₁ to R₆ are preferably made from an electrically insulating material such as a polymer, to limit the risk of shorting the electrodes and to maintain the cost low as compared to metal-based frames and rings. In any case, the material used preferably resists to the pressure, temperature and chemical environment of the hydrogen electrolysis process. Therefore, it is preferable that the frame and the ring resist to pressure as high as 120 bars, temperatures up to 120°C, and to alkaline environments, the electrolyte being typically alkaline KOH- or NaOH-based solutions.

Adequate materials are polysulfones and polyphenylene sulphide. These polymers can comprise glass fiber, for example so as to have glass fiber content comprised between 10% and 30%, preferably between 15% and 25%, by weight. The frame 100 and the rings R₁ to R₆ can be formed by injection molding and CNC (Computer Numerical Control) milling. The sealing surfaces of the grooves Gr may be finished by polishing.

In the present example, O-rings are employed as sealing elements to be installed in grooves, but the invention is not limited to this technical solution, and sealing may be ensured by any other mean deemed appropriate by the practitioner, such as overmolded sealing.

Figure 8 illustrate an electrolyzer 200 integrating a stack Stck made of a plurality of packages P forming each a plurality of electrolytic cells ECell. These packages are stacked so that their respective inlet and outlet coincide, sandwiched by two end plates End_Pl clamped by a plurality bolts B mounted onto threaded rods ROD. Inlets main channels In-MC₁ In-MC₂, are to be input with the anolyte A-lyte and the catholyte C-lyte, respectively, while the output main channel InOut-MC₁ outputs the anolyte A-lyte and oxygen gas O₂ and the output main channel Out-MC₂ outputs the catholyte C-lyte and hydrogen gas H₂. Although not represented on Figure 8, negative and positive current collectors can be placed on respective sides of the stack Stck for electrically connecting the stack to the outside.

In the example of this figure 8A, the anolyte and catholyte are introduced on one side of the stack Stck, at the level of a first end plate End_pl. The anolyte A-lyte and oxygen gas O₂ and the catholyte C-lyte and hydrogen gas H are evacuated at the opposing side of the stack Stck, at the level of the second opposing end plate End_pl. In a variation of the electrolyzer 200 represented on figure 8, the anolyte and catholyte may be introduced and evacuated on the same side of the stack, for instance at the level of the first end plate End_pl. In this configuration, the second end plate or any interposed device is configured to fluidly connects the inlets main channels In-MC₁,In-MC₂ of the last cell ECell to the output main channel InOut-MC₁,InOut-MC₂ of this cell. In this configuration, the end plate is electrically grounded.

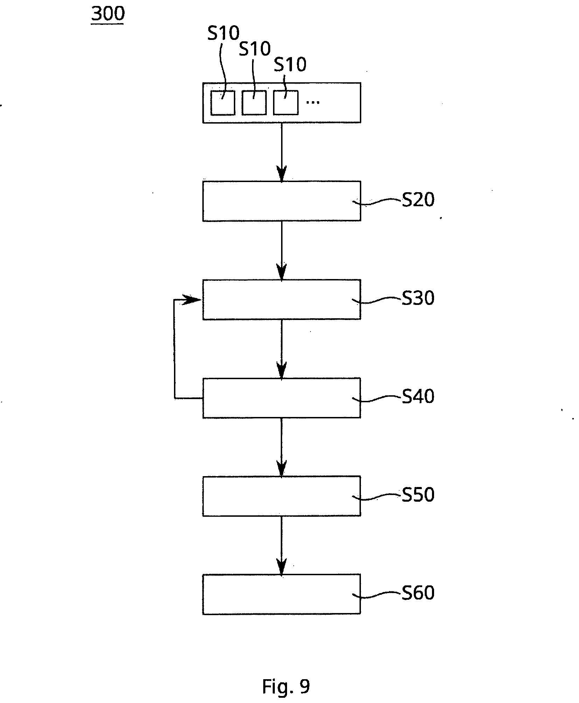

Figure 9 is a diagram representing the process of mounting the electrolyzer 200 of Figure 8.

A first step S10 consists in assembling packages P, by installing, from the inside of the frame 100 to the outside, on each side when applicable, the elements constituting at least two electrolytic cells ECell: diaphragms, bipolar plates, anodes and cathode, and, when applicable, porous transport layers.

For a package P illustrated in Figure 7, one may install in this order on the top side of the cell frame 100: the diaphragm D₂, the ring R₃, a cathode, a porous transport layer, an O-ring, the bipolar plate BP-2₂, the ring R₄, a porous transport layer, an anode, an O-ring, the diaphragm D₃, the ring R₅, a cathode, and a porous transport layer. On the other side, one may install in this order: an anode, a porous transport layer, an O-ring, the bipolar plate BP-2₁, the ring R₂, a porous transport layer, a cathode, the diaphragm D₁, an O-ring, the ring R₁, an anode, a porous transport layer, an O-ring and the bipolar plate BP-1.

A second step S20 consists in placing a first package P against a first end plate End_Pl.

A third step S30 consists in placing O-rings on a top surface of the first package P to ensure sealing around the inlet and outlet main channels and around the opening Op.

A fourth steps S40 consists in positioning a second package P against the first package P with the O-rings that have been just placed in-between.

The third step and the fourth step are repeated until a desired number of packages P are stacked.

A fifth step S50 consists in placing a second end plate End_Pl against the lastly positioned package P.

A sixth step S60 consists in securing the stack and applying pressure thereon by means of rods and bolts, in order to ensure tight sealing between each of the packages P and with the end.

An advantage of the cell frame 100 is the simplicity that it brings for the mounting of a stack Stck: instead of manipulating individually each electrolytic cell or the elements of each electrolytic cell part of the stack, a reduced number of packages P is to be manipulated. The packages can be assembled separately, in parallel par realizing simultaneously a plurality of steps S10, and not necessarily on the site of an electrolyzer.

Further, each package can be mounted and tested individually beforehand prior to being incorporated the stack, enhancing the reliability of the mounting operations, limiting, for example, the need to disassemble the stack to repair a leak.

The description and figures discussed above are made in consideration of an example in which bipolar plates would sit onto the steps St₁, St3, and St5, and that a diaphragm would sit onto the step St4 and rings placed onto the steps St5 and St3. However, positions of the bipolar plates could be inverted with those of the diaphragms, as long as diaphragms and bipolar plates are placed alternately and appropriate sealing is ensured between two consecutive electrolytic cells.

Further, the diaphragms are represented here as having the same dimensions. However, they could have dimensions different from one another, for example to simplify the mounting onto the cell frame or for sealing purposes.

Although the cell frame taken in example is presenting a circular shape, this does form a limitation and a cell frame according to the invention may present any practicable shape, such as a square or rectangular shape.

Also the principle of the invention may be exploited for any type of electrolysis, such as pressurized or atmospheric electrolysis, which requires to stack electrolytic cells ECell, as represented on figure 2A. Each of the features mentioned in this document can be freely combined within technical limits understood by the practitioner in the field of the invention.

## Claims

1. A cell frame (100) configured to be integrated in an electrolyzer, the frame forming a closed shape having an inner contour (InnCont) that defines an opening (Op) extending in an extension plane (ExtPl), the inner contour presenting at least two steps (St₁, St₂, St₃, St₄, St₅, St₆) each comprising a first surface (S1) perpendicular to the extension plane and a second surface (S2) parallel to the extension plane, the respective second surfaces of two (St₁, St₃, St₅) of the steps being configured to support two respective bipolar plates (BP-1, BP-2₁, BP-2₂).

2. The cell frame (100) according to claim 1, wherein the second surface of a third one of the at least two steps is configured to support a diaphragm (D₂) interposed between the two respective bipolar plates (BP-2₁, BP-2₂).

3. The cell frame (100) according to claim 1 or 2, wherein the second surfaces (S2) of the at least two steps (St₁, St₃, St₅) each have a groove (Gr) for a sealant member (ORing).

4. The cell frame (100) according to any one of claim 1 to claim 3, formed from an electrically insulating material.

5. The cell frame (100) according to any one of claim 1 to claim 4, the cell frame being a monobloc cell frame.

6. The cell frame (100) according to any one of claim 1 to claim 5, further comprising:
- a plurality of main channels (In-MC₁, In-MC₂, Out-MC₁, Out-MC₂) extending through an entire thickness (T) of the cell frame in a direction perpendicular to the extension plane, and
- distribution channels (Dist₁, Dist₂, Dist₃, Dist_{4,} Dist₅, Dist₆) extending substantially in parallel to the extension plane from a respective one of the main channels (In-MC₁, In-MC₂) to a respective one of the first surfaces (S1) so as to fluidically connect the main channels to the inner contour (InnCont).

7. The cell frame (100) according to claim 6, wherein first ones (Dist₁, Dist₃, Dist₅) of the distribution channels are formed at respective first depths along a thickness (T) of the cell frame (100), second ones (Dist₂, Dist_{4,} Dist₆) of the distribution channels are formed at respective second depths along the thickness (T) of the cell frame (100), the first channels (Dist₁, Dist₃, Dist₅) alternating in depth with the second channels (Dist₂, Dist_{4,} Dist₆).

8. The cell frame (100) according to claim 6 or 7, wherein the distribution channels (Dist₁, Dist₂, Dist₃, Dist_{4,} Dist₅, Dist₆) do not overlap one another when seen in a direction perpendicular to the extension plane (ExtPl).

9. The cell frame (100) according to any one of claim 1 to claim 8, the closed shape being circular, the first surfaces (S1) defining respective internal radiuses (Rad₁, Rad₃) of the inner contour.

10. The cell frame (100) according to any one of claim 1 to claim 9, wherein the at least two steps (St₁, St₃) comprise two steps having respective second surfaces (S2) oriented toward a same direction (Dir₁), and a first internal width (Rad₁) defined by the first surface (S1) of one of the steps is wider than a second internal width (Rad₃) defined by the first surface (S1) of the other of the steps (St₃).

11. The cell frame (100) according to any one of claim 1 to claim 9, wherein the at least two steps comprise two steps (St₃, St₅) having second surfaces (S2) that are respectively oriented toward two opposite directions (Dir₁, Dir₂) and first surfaces (S1) defining a same internal width (Rad₃).

12. A package (P) comprising the cell frame (100) according to any one of claim 1 to claim 11 and comprising further at least two bipolar plates (BP-1, BP-2₁, BP-2₂) and two diaphragms (D₁, D₂, D₃) mounted on the cell frame (100).

13. An electrolyzer (200) comprising a stack (Stck) of a plurality of the packages (P) according to claim 12.

14. a process (300) of fabrication of the electrolyzer (200) according to claim 13, comprising the steps of:
- assembling (S10) a plurality of the packages (P) according to claim 12; and
- stacking (S40) the plurality of assembled packages (P) so as to form the stack (Stck) according to claim 13.

## Patentansprüche

1. Zellrahmen (100), der dazu konfiguriert ist, in einen Elektrolyseur integriert zu werden, wobei der Rahmen eine geschlossene Form mit einer Innenkontur (InnCont) bildet, die eine Öffnung (Op) definiert, die sich in einer Verlängerungsebene (ExtPI) erstreckt, wobei die Innenkontur mindestens zwei Stufen (St₁, St₂, St₃, St₄, St₅, St₆) aufweist, die jeweils eine erste Oberfläche (S1) senkrecht zur Verlängerungsebene und eine zweite Oberfläche (S2) parallel zur Verlängerungsebene umfassen, wobei die jeweiligen zweiten Oberflächen von zwei (St₁, St₃, St₅) der Stufen so konfiguriert sind, dass sie zwei jeweilige bipolare Platten (BP-1, BP-2₁, BP-2₂) tragen.

2. Zellrahmen (100) nach Anspruch 1, wobei die zweite Oberfläche einer Dritten der mindestens zwei Stufen so konfiguriert ist, dass sie eine Membran (D₂) trägt, die zwischen den beiden jeweiligen bipolaren Platten (BP-2₁, BP-2₂) angeordnet ist.

3. Zellrahmen (100) nach Anspruch 1 oder 2, wobei die zweiten Oberflächen (S2) der mindestens zwei Stufen (St₁, St₃, St₅) jeweils eine Nut (Gr) für ein Dichtungselement (O-Ring) aufweisen.

4. Zellrahmen (100) nach einem der Ansprüche 1 bis 3, gebildet aus einem elektrisch isolierenden Material.

5. Zellrahmen (100) nach einem der Ansprüche 1 bis 4, wobei der Zellrahmen ein Monoblock-Zellrahmen ist.

6. Zellrahmen (100) nach einem der Ansprüche 1 bis 5, weiter umfassend:
- eine Vielzahl von Hauptkanälen (In-MC₁, In-MC₂, Out-MC₁, Out-MC₂), die sich durch eine gesamte Dicke (T) des Zellrahmens in einer Richtung senkrecht zur Verlängerungsebene erstrecken, und
- Verteilerkanäle (Dist₁, Dist₂, Dist₃, Dist_{4,} Dist₅, Dist₆), die sich im Wesentlichen parallel zur Verlängerungsebene von einem Jeweiligen der Hauptkanäle (In-MC₁, In-MC₂) zu einer Jeweiligen der ersten Oberflächen (S1) erstrecken, um die Hauptkanäle fluidisch mit der Innenkontur (InnCont) zu verbinden.

7. Zellrahmen (100) nach Anspruch 6, wobei Erste (Dist₁, Dist₃, Dist₅) der Verteilungskanäle in jeweiligen ersten Tiefen entlang einer Dicke (T) des Zellrahmens (100) ausgebildet sind, Zweite (Dist₂, Dist_{4,} Dist₆) der Verteilungskanäle in jeweiligen zweiten Tiefen entlang der Dicke (T) des Zellrahmens (100) ausgebildet sind, wobei die ersten Kanäle (Dist₁, Dist₃, Dist₅) mit den zweiten Kanälen (Dist₁, Dist_{4,} Dist₆) hinsichtlich der Tiefe abwechseln.

8. Zellrahmen (100) nach Anspruch 6 oder 7, wobei sich die Verteilungskanäle (Dist₁, Dist₂, Dist₃, Dist_{4,} Dist₅, Dist₆) in einer Richtung senkrecht zur Verlängerungsebene (ExtPl) gesehen nicht überlappen.

9. Zellrahmen (100) nach einem der Ansprüche 1 bis 8, wobei die geschlossene Form kreisförmig ist, die ersten Oberflächen (S1) jeweilige Innenradien (Rad₁, Rad₃) der Innenkontur definieren.

10. Zellrahmen (100) nach einem der Ansprüche 1 bis 9, wobei die mindestens zwei Stufen (St₁, St₃) zwei Stufen mit jeweils zweiten Oberflächen (S2) umfassen, die in eine selbe Richtung (Dir₁) ausgerichtet sind, und eine erste Innenbreite (Rad₁), die durch die erste Oberfläche (S1) einer der Stufen definiert ist, breiter ist als eine zweite Innenbreite (Rad₃), die durch die erste Oberfläche (S1) der Anderen der Stufen (St₃) definiert ist.

11. Zellrahmen (100) nach einem der Ansprüche 1 bis 9, wobei die mindestens zwei Schritte zwei Schritte (St₃, St₅) umfassen, die zweite Oberflächen (S2) aufweisen, die jeweils in zwei entgegengesetzte Richtungen (Dir₁, Dir₂) ausgerichtet sind, und erste Oberflächen (S1) aufweisen, die eine gleiche Innenbreite (Rad₃) definieren.

12. Paket (P), umfassend den Zellrahmen (100) nach einem der Ansprüche 1 bis 11 und weiter umfassend mindestens zwei bipolare Platten (BP-1, BP-2₁, BP-2₂) und zwei Membranen (D₁, D₂, D₃), die an dem Zellrahmen (100) angebracht sind.

13. Elektrolyseur (200), umfassend einen Stapel (Stck) einer Vielzahl von Paketen (P) nach Anspruch 12.

14. Verfahren (300) zur Herstellung des Elektrolyseurs (200) nach Anspruch 13, umfassend die Schritte:
- Zusammenbauen (S10) einer Vielzahl der Pakete (P) nach Anspruch 12; und
- Stapeln (S40) der Vielzahl von zusammengesetzten Paketen (P), um den Stapel (Stck) nach Anspruch 13 zu bilden.

## Revendications

1. Cadre (100) de cellule configuré pour être intégré dans un électrolyseur, le cadre formant une forme fermée présentant un contour interne (InnCont) qui définit une ouverture (Op) s'étendant dans un plan d'extension (ExtPI), le contour interne présentant au moins deux marches (St₁, St₂, St₃, St₄, St₅, St₆) comprenant chacune une première surface (S1) perpendiculaire au plan d'extension et une deuxième surface (S2) parallèle au plan d'extension, les deuxièmes surfaces respectives de deux (St₁, St₃, St₅) des marches étant configurées pour supporter deux plaques bipolaires (BP-1, BP-2₁, BP-2₂) respectives.

2. Cadre (100) de cellule selon la revendication 1, dans lequel la deuxième surface d'une troisième des au moins deux marches est configurée pour supporter un diaphragme (D₂) interposé entre les deux plaques bipolaires (BP-2₁, BP-2₂) respectives.

3. Cadre (100) de cellule selon la revendication 1 ou revendication 2, dans lequel les deuxièmes surfaces (S2) des au moins deux marches (St₁, St₃, St₅) présentent chacune une rainure (Gr) pour un élément d'étanchéité (joint torique).

4. Cadre (100) de cellule selon l'une quelconque des revendications 1 à 3, formé à partir d'un matériau électriquement isolant.

5. Cadre (100) de cellule selon l'une quelconque des revendications 1 à 4, le cadre de cellule étant un cadre de cellule monobloc.

6. Cadre (100) de cellule selon l'une quelconque des revendications 1 à 5, comprenant en outre :
- une pluralité de canaux principaux (In-MC₁, In-MC₂, Out-MC₁, Out-MC₂) s'étendant à travers une épaisseur (T) entière du cadre de cellule dans une direction perpendiculaire au plan d'extension, et
- des canaux de distribution (Dist₁, Dist₂, Dist₃, Dist_{4,} Dist₅, Dist₆) s'étendant de manière sensiblement parallèle au plan d'extension depuis un respectif des canaux principaux (In-MC₁, In-MC₂) jusqu'à une respective des premières surfaces (S1) de manière à raccorder de manière fluidique les canaux principaux au contour interne (InnCont).

7. Cadre (100) de cellule selon la revendication 6, dans lequel des premiers (Dist₁, Dist₃, Dist₅) des canaux de distribution sont formés à des premières profondeurs respectives le long d'une épaisseur (T) du cadre (100) de cellule, des deuxièmes (Dist₂, Dist_{4,} Dist₅) des canaux de distribution sont formés à des deuxièmes profondeurs respectives le long de l'épaisseur (T) du cadre (100) de cellule, les premiers canaux (Dist₁, Dist₃, Dist₅) alternant en profondeur avec les deuxièmes canaux (Dist₂, Dist_{4,} Dist₆).

8. Cadre (100) de cellule selon la revendication 6 ou revendication 7, dans lequel les canaux de distribution (Dist₁, Dist₂, Dist₃, Dist₄, Dist₅, Dist₆) ne se chevauchent pas lorsqu'ils sont vus dans une direction perpendiculaire au plan d'extension (ExtPI).

9. Cadre (100) de cellule selon l'une quelconque des revendications 1 à 8, la forme fermée étant circulaire, les premières surfaces (S1) définissant des rayons internes (Rad₁, Rad₃) respectifs du contour interne.

10. Cadre (100) de cellule selon l'une quelconque des revendications 1 à 9, dans lequel les au moins deux marches (St₁, St₃) comprennent deux marches présentant des deuxièmes surfaces (S2) respectives orientées vers une même direction (Dir₁), et une première largeur interne (Rad₁) définie par la première surface (S1) d'une des marches est plus large qu'une deuxième largeur interne (Rad₃) définie par la première surface (S1) de l'autre des marches (St₃).

11. Cadre (100) de cellule selon l'une quelconque des revendications 1 à 9, dans lequel les au moins deux marches comprennent deux marches (St₃, St₅) présentant des deuxièmes surfaces (S2) qui sont respectivement orientées vers deux directions (Dir₁, Dir₂) opposées et des premières surfaces (S1) définissant une même largeur interne (Rad₃).

12. Boîtier (P) comprenant le cadre (100) de cellule selon l'une quelconque des revendications 1 à 11 et comprenant en outre au moins deux plaques bipolaires (BP-1, BP-2₁, BP-2₂) et deux diaphragmes (D₁, D₂, D₃) montés sur le cadre (100) de cellule.

13. Électrolyseur (200) comprenant une pile (Stck) d'une pluralité des boîtiers (P) selon la revendication 12.

14. Processus (300) de fabrication de l'électrolyseur (200) selon la revendication 13, comprenant les étapes consistant à :
- assembler (S10) une pluralité des boîtiers (P) selon la revendication 12 ; et
- empiler (S40) la pluralité de boîtiers (P) assemblés de manière à former la pile (Stck) selon la revendication 13.
